# EUROPÄISCHE PATENTSCHRIFT

(11) **EP 2 739 471 B1**
(45) Veröffentlichungstag und Bekanntmachung des Hinweises auf die Patenterteilung: **08.01.2020**
(21) Anmeldenummer: 08850169.7
(22) Anmeldetag: 12.11.2008
(51) Int. Cl.: B32B 9/04, B32B 19/02, C04B 41/45, E04C 2/26

(54) **STEINTRÄGER MIT VORSPANNUNG**
PRESTRESSED STONE CARRIER
SUPPORT POUR PIERRE, SOUMIS À UNE PRÉCONTRAINTE

(30) Priorität: 13.11.2007 DE 202007015789 U
(43) Veröffentlichungstag der Anmeldung: 11.06.2014
(73) Patentinhaber: Kuse, Kolja, 81925 München (DE)
(72) Erfinder: Kuse, Kolja, 81925 München (DE)
(86) Internationale Anmeldenummer: PCT/EP2008/009574
(87) Internationale Veröffentlichungsnummer: WO 2009/062705

(56) Entgegenhaltungen:
- WO-A-00/23272
- WO-A-2008/049629
- DE-U1-202006 008 100
- DE-U1-202006 010 009
- DE-U1-202006 016 598
- DE-U1-202006 017 023
- DE-U1-202006 018 069
- DE-U1-202006 018 135
- DE-U1-202006 018 280

## Beschreibung

Die vorliegende Erfindung bezieht sich auf die Stabilisierung von Steingut im weiteren Sinn - das heißt Naturstein, Lavastein, Kunststein, sonstiges Steingut oder unter anderem auch verflüssigtem Steinmaterial oder direkt aus flüssiger Magma gewonnenes Steinmaterial - welches sich besonders durch eine hohe Druckstabilität, Druckfestigkeit und Porosität auszeichnet. Kern der Erfindung ist das Vorspannen des Steinguts durch Verwendung geeigneter schrumpfender Harze in Verbindung mit zugfesten Materialien und/oder Vorspannung, die durch Biegen erzeugt wird, welches das im folgenden Steingut genannte zu stabilisierende steinhaltige oder steinartige Material auf umweltfreundliche Weise so nachhaltig vorspannen kann, dass eine möglichst hohe Flexibilitaet des Steingutes entsteht. So entstehende Bauteile können nunmehr auch bewegte Stahl und Aluminium-Bauteile ersetzen, die insbesondere wegen des hohen Energieaufwandes bei der Herstellung und wegen des damit verbundenen hohen CO₂-Ausstosses mehr und mehr bedenkliche umweltfeindliche Nebenwirkungen haben und nunmehr durch Stein-Materialien, deren Herstellung mit wesentlich weniger CO₂-Ausstoss einhergeht, ersetzt werden können. Bezüglich des zu verwendenden Steinguts sind besonders Natursteine wie Basalt und Granit, granitähnliche Gesteine wie Gneis, Marmor, Kalkstein und Schiefer zu erwähnen, sowie alle sonstigen Materialien aus Stein die hoch druckbelastbar sind und insbesondere dadurch gekennzeichnet sind, daß sie einen geringen Ausdehnungskoeffizienten besitzen, sowohl was die Temperatur-, als auch was die Druck- bzw. Zugdehnungskoeffizienten betrifft. Diese Materialien zeichnen sich zwar einerseits durch eine hohe Belastbarkeit bei Druckbeanspruchung aus, sind dagegen aber fast völlig instabil bei Zug- und Biegebelastung.

Deshalb müssen Sie mit einer Schicht oder Hülle aus Fasermaterial verstärkt werden, so wie zum Beispiel in der EP 106 20 92 beschrieben. Darüber hinaus sollten Sie aber auch für manche Anwendungen vorgespannt werden, was zum Kern der hier vorgelegten Erfindung wird.

Neu für die Stabilisierung von Steingut ist die Verwendung von Harzen, die gezielt beim Aushärten schrumpfen können und Gesteinarten, die eine große Volumenkomprimierbarkeit besitzen. Hierdurch entsteht beim Aushärten des Harzes eine natürliche Vorspannung im Steingut. Zusätzlich kann diese Vorspannung dadurch verstärkt werden, dass die Teile - einmal auf einer Seite vorgespannt - ohne Bruch in die andere Richtung gebogen werden, ohne zu brechen, um dann auf der anderen Seite beschichtet zu werden. Das fertige ausgehärtete Bauteil ist nach diesem Prozess auf beiden Seiten vorgespannt, und am Ende des Prozesses mit einer genau berechenbaren Vorspannung versehen.

Einerseits koennen dafür Pfanzenfasern zum Einsatz kommen, die direkt aus pflanzlichen Grundstoffen gewonnen werden, andererseits kann es für Anwendungen, die eine sehr zugstabile Stabilisierung des Steins notwendig machen, Sinn machen Carbonfasern oder carbonisierte pflanzliche Grundstoffe zu verwenden. Unter bestimmten Umständen ist es auch möglich jede andere Art von zugstabilen Stabilisierungsschichten, wie z. B. Metall-Folien, gelochte Metallfolien, Glasfasermatten, Steinfasern, Pflanzenfasern und zugstabile Gewebe für die Erzeugung der Stein-Vorspannung zu nutzen.

Zu diesem Zweck wird mit Hilfe einer neuen Methode - der Vorspannung von Steingut durch Biegung und/oder schrumpfende Harze - Bauteile, die auf der Ausgangsbasis Stein gewonnen werden, bei denen eine oder beide Seiten einer Steinplatte oder eines Steinstabes - ggfls. gesamtumhüllend - stabilisiert werden, die durch einen wärme- oder hitzebeständige Matrix mit dem Stein verbunden wird, die den Stein vorspannt und auch unter Biegung sicher gegen Bruch schützt. Hierbei können nur solche Fasern Verwendung finden, die eine Zugstabilität haben, die gross genug ist, um den Stein vorzuspannen. Wegen der Vorspannung ist es möglich auch zugstabile Materilien zu nutzen, die einen Ausdehnungskoeffizienten besitzen, der größer als der des Steins ist. Selbst normale Glasfasern sind hierzu geeignet, was die Vorspannung extrem billig macht. Wie bereits in dem Patent EP 1062092 beschrieben, sind für Hochleistungsanwendungen Carbonfasern gut geeignet, da Sie einen geringen Ausdehungskoeffizienten und geringe Zugdehnung, sowie eine hohe Zugbelastbarkeit besitzen, und damit eine Vorspannung in weiteren thermischen Grenzen zulassen, als Glasfasern und andere Stabilisierungsschichten, die einen höheren Ausdehungskoeffizienten, als der des Steins besitzen.

Die vorliegende Erfindung bedient sich der im Zusammenhang mit dieser Erfindung entdeckten Eigenschaft von Stein durch Druck im Volumen änderbar zu sein und poröses Steingut zu verwenden, das viel "Luft" für Volumenänderung lässt. Dass diese Porosität Grund und Voraussetzung für Volumenänderung ist, ist wissenschaftlich gesehen eine neue Erkenntnis, die dazu führt, dass man den Stein in weiteren Grenzen biegen kann, ohne ihn zu zerstören, als bisher angenommen. Diese Eigenschaft ist Voraussetzung für den Kern der Erfindung.

Die vorliegende Erfindung schlägt einen umweltfreundlichen Weg vor, um biegsame Materialien zu erstellen, die das spezifische Gewicht haben von Aluminium - Granit hat ein spezifisches Gewicht zwischen 2.6 und 2.9 g/cm3, Aluminium hat 2.7 g/cm3 - Stein als alternatives Material für die Herstellung von Bauteilen aller Art zu benutzen, die bisher typischerweise nur aus Metall, Holz oder Kunststoff hergestellt werden, und insbesondere die hohe Druckfestigkeit von geeigneten Natursteinen für allgemeinere industrielle Anwendungen auf preiswerte Weise in der Form nutzbar zu machen, dass sie nunmehr auch auf berechenbare Weise biegsam gemacht werden.

Naturstein entwickelt auf diese Weise unerreicht gute Dämpfungseigenschaften. Gelingt es auf umweltfreundliche weise Stein vor Bruch zu schützen und auch noch zu biegen, hat man ein Material gewonnen, welches umweltfreundlich hergestellt werden kann und in der Regel in Summe noch bessere Materialeigenschaften aufweist als Stahl. Es wird zum Beispiel möglich sich selbst dämpfende Blattfedern zu bauen. Um das zu erreichen ist es zwingend nötig, den Stein nicht nur gegen Zug und damit verbundenen Bruch zu stabilisieren, sondern so weit vorzuspannen, dass die Streckgrenze des zu stabilisierenden Steins durch die notwendige Biegung nicht erreicht wird. Einen solchen Weg schlägt die Erfindung mit Hilfe einer geeigneten Vorspannung vor.

Die Erfindung basiert auf der Stabilisierung von Steingut durch ein flächig auf dem Stein aufgebrachtes Trägermaterial, welches vorzugsweise mit einem schrumpfenden Harz, vorzugsweise auf Epoxidharzbasis auf der Steinoberfläche angebracht wird. Beim Aushärten des Harzes wird der Stein auf der Seite, auf der das Trägermaterial angebracht ist, auf natürliche Weise vorgespannt. Wird das Bauteil ganzumhüllend vom Trägermaterial wie ein Korsett umspannt, dann wird der Stein symmetrisch vorgespannt.

Will man das entstandene Bauteil weiter vorspannen, wird eine mechanische Vorspannung dadurch erreicht, dass das Bauteil in den Grenzen der ersten Vorspannung gebogen wird, um in dieser gebogenen Stellung an der Zugseite noch einmal mit einem geeigneten Trägermaterial beschichtet wird. Nach Aushärtung ist das Bauteil gebogen und noch stärker vorgespannt. Soll eine weitere Vorspannung erzeugt werden, dann
muss das Bauteil in die entgegengestzte Richtung gebogen noch einmal beschichtet werden. Anschliessend erhält man unter Umständen bei gezielter Vorausberechnung ein symmetrisch vorgespanntes Bauteil. Der Stein wird bei diesem Vorgang im Volumen geschrumpft. Das ist deshalb möglich, weil sich die Kristallgrenzen im Stein reversibel verschieben lassen und somit die Porosität des Steins mit den winzigen Hohlräumen nutzen lassen. Diese Hohlräume bieten den Platz, den das Steinmaterial bei der erzwungenen Volumenänderung findet.

Mit Hilfe des Einsatzes von schrumpfenden Epoxidharzen, Polyesterharzen, Harzen auf Phenol-, Polyimid-, Cyanatester-, Melamin-, Polyurethan- oder Silikonbasis, genannt Matrix, in Kombination mit beliebigen zugstabilen Trägermaterialien, wird eine gezielte Zug-Stabilisierung von Stein für Biegebelastung möglich. Kennzeichnend ist hierbei, daß die dämpfenden Eigenschaften des Steins voll genutzt werden.

Durch geeignetes Tempern im Ofen kann die Vorspannung zusätzlich unterstützt, verstärkt und gezielt eingestellt werden.

Die Erfindung wird somit realisiert durch die Verwendung von möglichst druckbelastbarem und porösem Stein und einer Trägerschicht, die unter Hitzeeinwirkung mit Hilfe einer schrumpfenden Harz-Zwischenschicht aufgebracht wird und der Stein anschliessend ggfls. zusätzlich durch mehrfaches Biegen verbunden mit jeweiligem weiteren zugstabilisierenden Beschichten weiter vorgespannt wird.

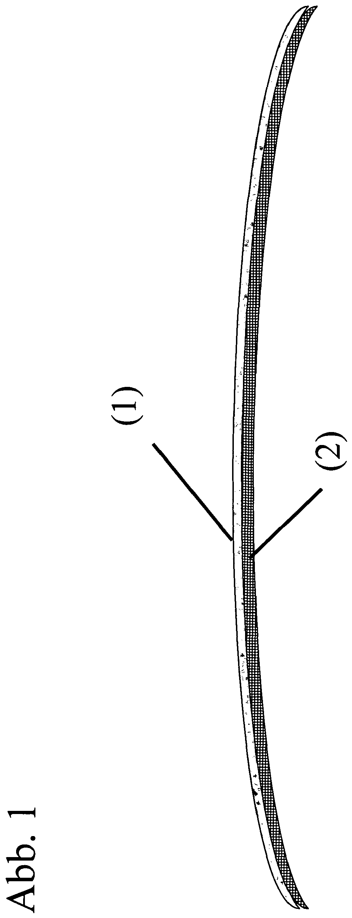

Eine der vielen möglichen Ausführungen der Erfindung beschreibt eine quadratische dünne Platte aus Stein (1), bestehend aus Naturstein, die einseitig mit einer Pflanzenfaser-, Basaltfaser- oder Carbonfasermatrix (2) stabilisiert wird (Abb. 1). Die Verbindung zwischen Stein und Faser wird durch ein schrumpfendes Harz hergestellt. Nach Aushärtung des Harzes, welches in die Steinoberfläche eindringt, ist das Bauteil gebogen und die beschichtete Steinseite vorgespannt.

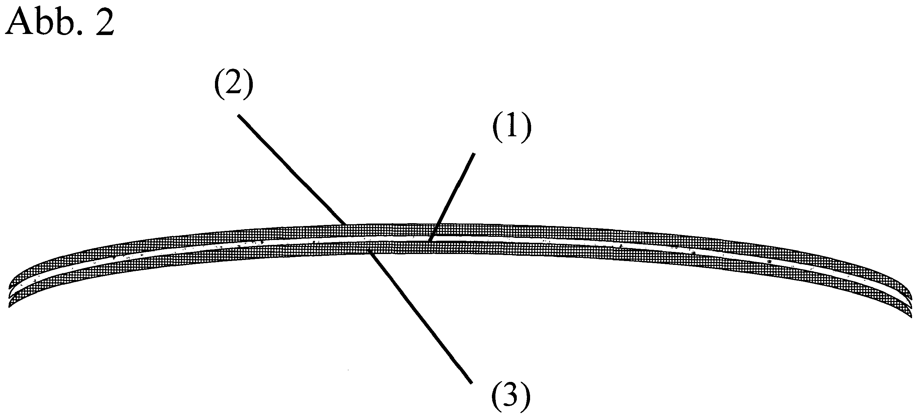

Abb. 2 zeigt eine zweite Ausführung der Erfindung als eine quadratische dünne Platte aus Naturstein (1), die auf der convexen Seite mit einer zugstabilen Schicht aus faserhaltigen Matrix (2) beschichtet ist und anschliessend in einen gebogenem, also vorgespannten Zustand versetzt und auch auf der anderen Seite mit einer zugstabilen Fasermatrixschicht (3) beschichtet wird. Nach Aushärtung der Matrix ist das Bauteil auf beiden Seiten der Steinplatte vorgespannt.

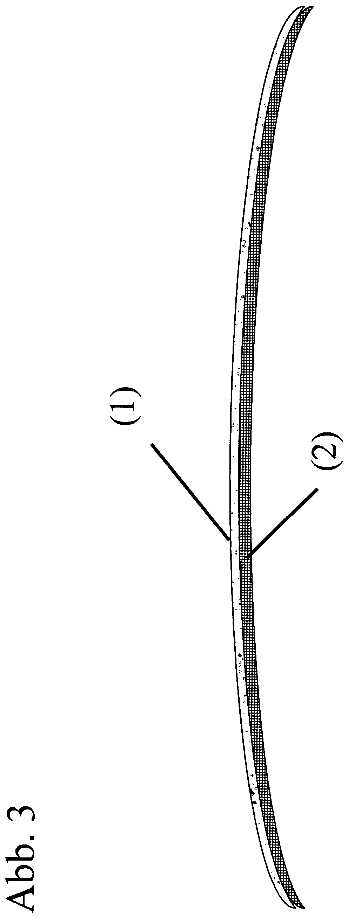

Abb. 3 zeigt einen dünnen Natursteinstreifen (1), der ohne Vorstabilisierung in gebogenem, also vorgespannten und ungebrochenem, d.h. unversehrtem Zustand mit einer zugstabilen Fasermatrix (2) beschichtet ist. Nach Aushärtung der Matrix ist und bleibt der Stein vorgespannt.

## Patentansprüche

1. Anordnung mit einem Stab oder einer Platte oder sonstigen Geometrie aus Naturstein, Kunststein, gebranntem Steingut, auf Basis von verflüssigtem Stein oder Magma hergestelltem Steingut - im folgenden Steingut genannt - welches großflächig einseitig oder beidseits oder vollständig umhüllend mit Hilfe von Harzen mit einem hinreichend zugstabilen Trägermaterial, im folgenden Träger genannt, beschichtet wird, **gekennzeichnet durch** eine volumenmässige Komprimierbarkeit des Steinguts und eine mit deren Hilfe durch Komprimierung erzeugbare Vorspannung, die entweder durch ein während des Aushärtens schrumpfendes Harz als Verbindungselemt von Steingut und Träger, durch mechanische Biegung des Steins vor bzw. während des Aushärtens eines beliebigen Harzes nach Aushärtung des jeweiligen Harzes im Stein oder durch eine Kombination beider Prinzipien erzeugt bzw. festbleibend eingebaut wird, und wobei der Träger aus Fasermaterial, Gewebe oder Metall besteht.

2. Anordnung nach Anspruch 1, **dadurch gekennzeichnet, daß** die Matrix des Trägers eine Epoxidharz-, Polyesterharz-, Phenolharz-, Polyimidharz-, Cyanatesterharz-, Melaminharz-, Polyurethanharz- oder Silikonharzbasis, eine thermoplastische Harzbasis hat oder aus einem beim Aushärten schrumpfenden Harz besteht.

3. Anordnung nach Anspruch 1 und 2, **dadurch gekennzeichnet, daß** die Anordnung in die entgegengesetzte Richtung gebogen noch einmal mit dem Träger beschichtet wird.

4. Anordnung nach Anspruch 1, 2 und 3, **dadurch gekennzeichnet, daß** der Träger ein Gemisch unterschiedlicher Fasermaterialien und/oder Metallfolien in einer Schicht enthält oder aus mehreren Schichten mit jeweils unterschiedlichen Fasermaterialien und/oder Metallfolien besteht.

5. Anordnung nach Anspruch 1 bis 4, **dadurch gekennzeichnet, daß** der Träger mit Hilfe eines den Schrumpfprozess des Harzes verstärkenden Temperprozesses aufgebracht wird.

6. Anordnung nach Anspruch 1 bis 5, **dadurch gekennzeichnet, daß** das Material des Trägers aus Carbonfasern, Steinfasern, Basaltfasern, Pflanzenfasern, Glasfasern, carbonisierten Pflanzenfasern, zugstabilen Geweben oder Metallfolien oder einem Gemisch dieser Schichten in unterschiedlicher Reihenfolge besteht.

7. Anordnung nach Anspruch 1 bis 6, **dadurch gekennzeichnet, daß** der Träger einen ähnlichen Ausdehungskoeffizienten besitzt, wie das zu tragende Steingut.

8. Anordnung nach Anspruch 1 bis 6, **dadurch gekennzeichnet, daß** der Träger einen gleichen Ausdehungskoeffizienten besitzt, wie das zu tragende Steingut.

9. Anordnung nach Anspruch 1 bis 6, **dadurch gekennzeichnet, daß** der Träger einen kleineren Ausdehungskoeffizienten besitzt, wie das zu tragende Steingut.

10. Anordnung nach Anspruch 1 bis 9, **dadurch gekennzeichnet, daß** das Bauteil als Blattfeder oder rohrförmig zusammengesetztes oder massives schwingungsdämpfendes Element mit quadratischem Querschnitt in Rotorblättern, Flügeln oder Masten zum Einsatz kommt.

11. Anordnung nach Anspruch 1 bis 9, **dadurch gekennzeichnet, daß** das Bauteil einseitig stabilisiert als Arbeitsplatte, zum Beispiel als Küchenarbeitsplatte ausgeführt ist.

12. Anordnung nach Anspruch 1 bis 11, **dadurch gekennzeichnet, daß** das Bauteil zusätzlich durch eine weitere Schicht in Form einer Eierkastengeometrie oder anderen Sandwicheinlage, wie z.B. Bienenwabenformen, oder Blähglas, stabilisiert wird.

13. Anordnung nach einem der Ansprüche 1 bis 12, **dadurch gekennzeichnet, daß** eine der Träger-Schichten eine Metallschicht ist, die gelocht ist, damit die Ausdehung der Metall-Materials nach innen erfolgen kann.

## Claims

1. Arrangement with a rod or a plate or other geometry of natural stone, artificial stone, fired stoneware, stoneware based on liquefied stone or magma - in the following called stoneware - which is large area coated by the help of resins with a sufficient tensile-stable carrier material, hereinafter referred to as carrier, on one side or both sides or completely enveloping,
**characterized by** a volume compressibility of the stoneware and a prestress producible by its compression, which is being produced or permanently built in either by a shrinking resin during curing of the resin, serving as a connection element between stoneware and support or by mechanical bending of the stone before or during the curing of any resin after curing in the stone or through a combination of both principles, and wherein the carrier consists of fiber material, woven fabric or metal.

2. Arrangement according to claim 1, **characterized in that** the matrix of the carrier has an epoxy resin, polyester resin, phenolic resin, polyimide resin, cyanate ester resin, melamine resin, polyurethane resin or silicone resin base, a thermoplastic resin base or consists of a hardening-shrinking resin.

3. Arrangement according to claim 1 and 2, **characterized in that** the arrangement is bent into the opposite direction and coated once again with the carrier.

4. Arrangement according to claim 1, 2 and 3, **characterized in that** the carrier contains a mixture of different fiber materials and / or metal foils in one layer or consists of several layers, each with different fiber materials and / or metal foils.

5. Arrangement according to claim 1 to 4, **characterized in that** the carrier is applied by means of an annealing process reinforcing the shrinking process of the resin.

6. Arrangement according to claim 1 to 5, **characterized in that** the material of the carrier consists of carbon fibers, stone fibers, basalt fibers, vegetable fibers, glass fibers, carbonized plant fibers, tension-resistant fabrics or metal foils or a mixture of these layers in different order.

7. Arrangement according to claim 1 to 6, **characterized in that** the carrier described in claim 1 has a similar coefficient of expansion, as the stoneware to be supported.

8. Arrangement according to claim 1 to 6, **characterized in that** the carrier described in claim 1 has the same coefficient of expansion, as the stoneware to be supported.

9. Arrangement according to claim 1 to 6, **characterized in that** the carrier has a smaller coefficient of expansion, such as the stoneware to be supported.

10. Arrangement according to claim 1 to 9, **characterized in that** the component is used as a leaf spring or tubular composite or solid vibration damping element with a square cross-section in rotor blades, wings or masts.

11. Arrangement according to claim 1 to 9, **characterized in that** the component stabilized on one side is implemented as a worktop, designed for example as a kitchen worktop.

12. Arrangement according to claim 1 to 11, **characterized in that** the component is additionally stabalized by another layer in the form of an egg box geometry or other sandwich insert, such as honeycomb forms or expanded glass structures.

13. Arrangement according to one of claims 1 to 12, **characterized in that** one of the carrier layers is a metal layer which is perforated, so that the expansion of the metal material can take place inwardly.

## Revendications

1. Arrangement avec une tige ou une plaque ou autre géométrie de pierre naturelle, pierre artificielle, grès cuit, grès à base de pierre liquéfiée ou de magma - dans les suivants appelé grès - qui est grande surface recouverte à l'aide de résines avec une traction suffisante - matériau support stable, ci-après désigné support, d'un côté ou des deux côtés ou complètement enveloppant,
**caractérisé par** une compressibilité volumique du grès et une précontrainte pouvant être produite par sa compression, produite ou incorporée de manière permanente, soit par une résine rétractable pendant le durcissement de la résine, servant d'élément de liaison entre le grès et le support, ou par une flexion mécanique du la pierre avant ou pendant le durcissement de toute résine après le durcissement dans la pierre ou par une combinaison des deux principes, et dans laquelle le support est constitué d'un matériau fibreux, d'un tissu ou d'un métal.

2. Agencement selon la revendication 1, **caractérisé en ce que** la matrice du support comporte une base résine époxy, une base résine polyester, une base résine phénolique, une base résine polyimide, une base résine ester cyanate, une base résine mélamine, une base résine polyuréthane ou une base de résine de silicone, ou une base en résine thermoplastique ou ce constitue d'une résine durcissante-rétractable.

3. Agencement selon les revendications 1 et 2, **caractérisé en ce que** l'agencement est plié dans le sens opposé et recouvert de nouveau avec le support.

4. Agencement selon les revendications 1, 2 et 3, **caractérisé en ce que** le support contient un mélange de différents matériaux fibreux et / ou de feuilles métalliques en une couche ou est constitué de plusieurs couches, chacune avec des matériaux fibreux et / ou des feuilles métalliques différents.

5. Agencement selon les revendications 1 à 4, **caractérisé en ce que** le support est appliqué au moyen d'un procédé de recuit renforçant le processus de rétrécissement de la résine.

6. Agencement selon les revendications 1 à 5, **caractérisé en ce que** le matériau du support est constitué de fibres de carbone, de fibres de pierre, de fibres de basalte, de fibres végétales, de fibres de verre, de fibres végétales carbonisées, de tissus résistants à la tension ou de feuilles métalliques ou d'un mélange de ces couches dans un ordre différent.

7. Agencement selon les revendications 1 à 6, **caractérisé en ce que** le support décrit à la revendication 1 a un coefficient de dilatation similaire au support en grès.

8. Agencement selon les revendications 1 à 6, **caractérisé en ce que** le support décrit à la revendication 1 a le même coefficient de dilatation que le grès à supporter.

9. Agencement selon les revendications 1 à 6, **caractérisé en ce que** le support a un coefficient de dilatation plus faible, tel que le grès à supporter.

10. Agencement selon les revendications 1 à 9, **caractérisé en ce que** le composant est utilisé en tant qu'élément d'amortissement des vibrations d'un ressort à lame ou composite composite ou solide à section carrée dans les pales, les ailes de rotors ou les mâts.

11. Agencement selon les revendications 1 à 9, **caractérisé en ce que** le composant stabilisé sur un côté est réalisé en tant que plan de travail, conçu par exemple en tant que plan de travail de cuisine.

12. Agencement selon les revendications 1 à 11, **caractérisé en ce que** le composant est en outre stabilisé par une autre couche sous la forme d'une boîte à œufs ou d'un autre insert en sandwich, tel que des formes en nid d'abeille ou des structures en verre expansé.

13. Agencement selon l'une des revendications 1 à 12, **caractérisé en ce que** l'une des couches porteuses est une couche métallique perforée, de sorte que la dilatation du matériau métallique puisse avoir lieu vers l'intérieur.
